# FASCICULE DE BREVET EUROPEEN

(11) **EP 0 566 473 B1**
(45) Date de publication et mention de la délivrance du brevet: **04.01.1995**
(21) Numéro de dépôt: 93400954.9
(22) Date de dépôt: 13.04.1993
(51) Int. Cl.: F28F 9/00

(54) **Dispositif pour la fixation d'un échangeur de chaleur à boîte collectrice tubulaire**
Befestigung eines Wärmetauschers mit rohrförmiger Endkammer
Fastening of a heat-exchanger with a tubular header box

(30) Priorité: 16.04.1992 FR 9204709
(43) Date de publication de la demande: 20.10.1993
(73) Titulaire: VALEO THERMIQUE MOTEUR, 78320 Le Mesnil Saint-Denis (FR)
(72) Inventeur: Tordjeman, Jean-Michel, F-78990 Elancourt (FR)
(74) Mandataire: Gamonal, Didier

(56) Documents cités:
- EP-A- 0 132 844
- GB-A- 2 223 091

## Description

L'invention concerne un dispositif pour la fixation d'un échangeur de chaleur, du type comportant au moins une boîte collectrice tubulaire et un faisceau de tubes, sur une pièce support.

Un tel échangeur de chaleur peut constituer notamment un condenseur propre à faire partie d'une installation de climatisation d'un véhicule automobile et à être parcouru par un fluide frigorigène. Dans un tel condenseur, les tubes sont munis d'intercalaires ondulés formant ailettes de refroidissement et ils sont brasés à une ou deux boîtes collectrices. En effet, les tubes peuvent avoir une configuration en épingle à cheveu et être reliés à une boîte collectrice, ou bien avoir une configuration droite et être reliés à deux boîtes collectrices montées respectivement aux deux extrémités du faisceau.

La pièce support peut, par exemple, faire partie de la carrosserie d'un véhicule automobile, ou encore faire partie d'un accessoire, par exemple d'un autre échangeur de chaleur.

Il est connu, en effet, de fixer le condenseur d'une installation de climatisation sur un autre échangeur de chaleur, tel qu'un radiateur de refroidissement d'un moteur de véhicule automobile, de manière qu'un même flux d'air puisse traverser successivement le radiateur de refroidissement et le condenseur.

Pour fixer un échangeur de chaleur du type précité, il est connu, d'après la publication de Brevet japonais No 64-38 481, d'utiliser des colliers en forme de U, en une ou deux parties, qui sont emboîtés sur une boîte collectrice tubulaire et fixés à celle-ci par des vis de serrage.

Cette solution a pour inconvénient de nécessiter une modification de la structure du faisceau de tubes et des opérations de montage complexes à mettre en oeuvre.

Il est connu par ailleurs, d'après la publication EP-0 440 400, de prévoir des pattes de fixation soudées sur la boîte collectrice tubulaire.

Cette solution n'est pas satisfaisante étant donné que, en cas de rupture d'une patte de fixation, il faut remplacer tout l'ensemble formé par l'échangeur de chaleur et ses pattes de fixation.

L'invention a notamment pour but de surmonter les inconvénients mentionnés ci-dessus.

Elle propose, en conséquence, un dispositif de fixation du type défini en introduction, qui comprend :
- un premier élément de fixation comportant une partie centrale concave propre à s'adapter contre une région périphérique de la boîte collectrice, au moins un ergot de retenue prévu à une extrémité de la partie centrale, et un prolongement prévu à une autre extrémité de la partie centrale et portant des moyens de serrage;
- un second élément de fixation comportant une partie centrale concave propre à s'adapter contre une région périphérique opposée de la boîte collectrice, une patte de retenue prévue à une extrémité de la partie centrale et comportant au moins une lumière de réception de l'ergot de retenue du premier élément de fixation, et un prolongement prévu à une autre extrémité de la partie centrale et portant des moyens de serrage propres à coopérer avec les moyens de serrage du premier élément de fixation pour provoquer le rapprochement des prolongements respectifs du premier et du second éléments de fixation; et
- une patte de fixation formée d'une seule pièce avec le premier élément de fixation et/ou le second élément de fixation et propre à être reliée à la pièce support.

Un tel dispositif peut être facilement monté sur la boîte collectrice, sans nécessiter de modifications notables du faisceau.

Il peut en outre être facilement démonté en vue de son remplacement ou en vue du remplacement de l'échangeur de chaleur.

Dans une première forme de réalisation de l'invention, la patte de fixation prolonge la patte de retenue du second élément de fixation.

La patte de fixation peut ainsi être constituée d'une languette propre à être emmanchée en force dans un logement de la pièce support, par exemple dans un logement d'une boîte collectrice d'un autre échangeur de chaleur.

En variante, cette languette peut être coudée et munie d'un trou pour la fixation de la languette sur la pièce support, par exemple sur une traverse d'un autre échangeur de chaleur, au moyen d'un ensemble vis-écrou.

Dans une autre forme de réalisation de l'invention, la patte de fixation est rattachée à la partie centrale et au prolongement du second élément de fixation.

Dans cette forme de réalisation, la patte de fixation peut, par exemple, être réalisée monobloc avec la boîte collectrice d'un autre échangeur de chaleur.

Dans les différentes formes de réalisation précitées, les moyens de serrage comprennent avantageusement au moins un bossage dépendant d'un des prolongements précités et muni d'un trou axial, ainsi qu'une vis propre à traverser l'autre prolongement du dispositif et à s'engager dans le trou axial du bossage. La vis, qui peut être notamment autotaraudeuse, assure ainsi le rapprochement des deux prolongements et par conséquent le serrage du dispositif autour de la boîte collectrice, à la manière d'un collier. Le bossage est avantageusement choisi de manière à pouvoir s'interposer dans l'espace ménagé entre deux tubes adjacents du faisceau.

De préférence, les prolongements respectifs du premier et du second éléments de fixation comportent, sur des faces en regard, au moins une butée en saillie propre à s'introduire entre deux tubes adjacents de l'échangeur.

Ces butées en saillie contribuent à une meilleure immobilisation du dispositif autour de la boîte collectrice.

Dans une autre forme de réalisation de l'invention, le prolongement du second élément de fixation constitue une patte repliée munie d'un écrou et propre à s'emmancher sur un rebord en saillie de la pièce de retenue, tandis que le prolongement du premier élément de fixation comporte une patte pliée propre à s'appliquer contre la patte repliée du second élément de fixation, les moyens de serrage comportant une vis propre à traverser successivement la patte pliée et la patte repliée et à coopérer avec l'écrou.

Cette forme de réalisation convient tout particulièrement à la fixation de l'échangeur de chaleur sur la traverse d'un autre échangeur de chaleur.

Dans cette forme de réalisation, les moyens de serrage, c'est-à-dire la vis et l'écrou, assurent à la fois le rapprochement du premier et du second éléments de fixation à la manière d'un collier et leur fixation sur la pièce support.

Dans la description qui suit, faite seulement à titre d'exemple, on se réfère aux dessins annexés, sur lesquels :
- la figure 1 est une vue d'extrémité, avec coupe partielle, d'un dispositif de fixation selon une première forme de réalisation de l'invention, monté sur une boîte collectrice d'un échangeur de chaleur à tubes plats;
- la figure 2 est une vue en coupe locale selon la ligne II-II de la figure 1;
- la figure 3 est une vue en élévation, à échelle agrandie, du premier élément de fixation du dispositif de la figure 1;
- la figure 4 est une vue en élévation, à échelle agrandie, du second élément de fixation du dispositif de la figure 1;
- la figure 5 est une vue d'extrémité montrant une variante de réalisation du dispositif de la figure 1, appliquée à la fixation de l'échangeur de chaleur sur un autre échangeur de chaleur;
- la figure 6 est une vue en coupe partielle suivant la ligne VI-VI de la figure 5;
- la figure 7 est une vue d'extrémité montrant un dispositif de fixation selon une autre forme de réalisation de l'invention, appliqué à la fixation d'un échangeur de chaleur à boîte collectrice tubulaire sur un autre échangeur de chaleur;
- la figure 8 est une vue partielle de dessus montrant un dispositif de fixation selon l'invention, réalisé suivant une autre forme de réalisation, pour la fixation d'un échangeur de chaleur à boîte tubulaire sur une traverse d'un autre échangeur de chaleur;
- la figure 9 est une vue en coupe suivant la ligne IX-IX de la figure 8;
- la figure 10 est une vue en coupe suivant la ligne X-X de la figure 8;
- la figure 11 est une vue de dessus montrant un dispositif de fixation, selon une autre forme de réalisation de l'invention, appliqué à la fixation d'un échangeur de chaleur à boîte tubulaire sur une traverse d'un autre échangeur de chaleur; et
- la figure 12 est une vue en coupe suivant la ligne XII-XII de la figure 11.

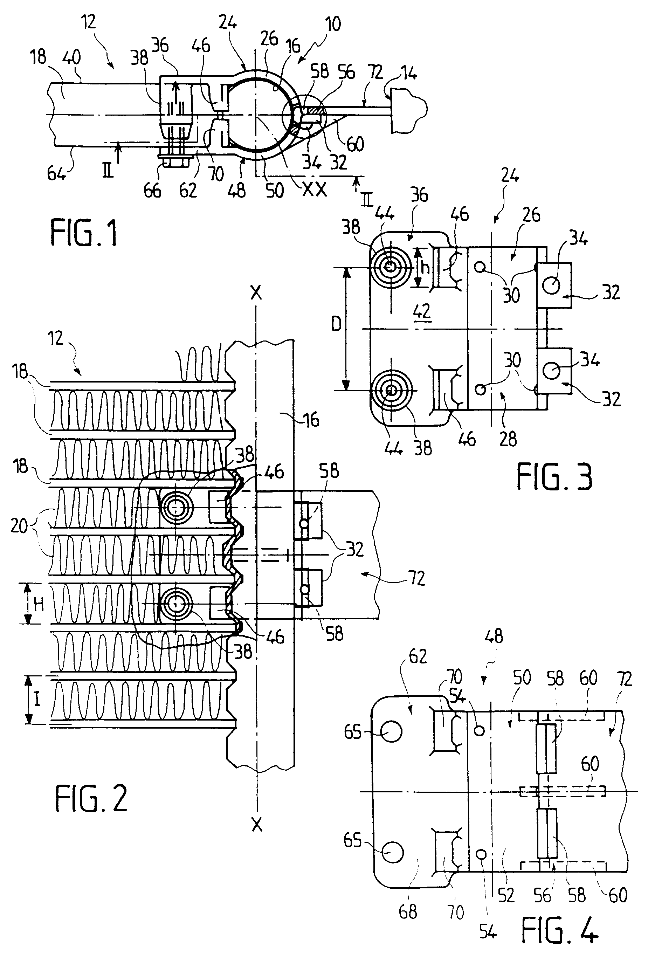

On se réfère tout d'abord aux figures 1 et 2 qui représentent un dispositif 10 pour la fixation d'un échangeur de chaleur 12 sur une pièce support 14. L'échangeur de chaleur 12 comprend au moins une boîte collectrice tubulaire 16 d'axe XX et un faisceau de tubes plats 18 entre lesquels sont disposés des intercalaires ondulés 20 servant d'ailettes de refroidissement. Les tubes 18 ont une section droite aplatie et sont introduits dans des fentes oblongues, de forme correspondante, ménagées dans la paroi de la boîte collectrice 16. L'ensemble ainsi formé est brasé. Les tubes 18 peuvent être soit des tubes en épingle, auquel cas l'échangeur de chaleur ne comporte qu'une seule boîte collectrice 16, soit des tubes droits montés entre deux boîtes collectrices prévues aux deux extrémités du faisceau.

Un tel échangeur de chaleur est utilisé généralement comme condenseur et est alors parcouru par un fluide frigorigène destiné par exemple à la climatisation de l'habitacle d'un véhicule automobile.

Le dispositif de fixation 10 comprend un premier élément de fixation 24 (figures 1 à 3) comportant une partie centrale concave 26 propre à s'adapter contre une région périphérique de la boîte collectrice 16. Dans l'exemple, la partie 26 est propre à entourer la boîte collectrice sur un arc de cercle correspondant approximativement à un tiers de circonférence. La partie 26 comporte une face interne concave 28 sur laquelle sont formés en saillie quatre bossages 30 en forme de calotte sphérique propres à venir appuyer contre la paroi de la boîte collectrice 16 (figure 3).

L'élément de fixation 24 comprend en outre deux ergots de retenue 32 prévus à une extrémité de la partie centrale 26, ces ergots étant repliés pour être dirigés dans une direction sensiblement radiale par rapport à l'axe XX lorsque l'élément 24 est appliqué contre la boîte collectrice (figure 1). Les ergots 32 sont munis chacun d'un bossage de retenue 34 (figures 1 et 3) dont le rôle sera expliqué plus loin.

L'élément de fixation 24 comporte en outre un prolongement 36 prévu à une autre extrémité de la partie centrale 26 et portant deux bossages 38 formant moyens de serrage. Le prolongement 36 s'étend dans un plan sensiblement parallèle à celui des ergots 32 de manière à venir en appui contre un côté longitudinal 40 du faisceau. Les bossages 38 sont formés en saillie par rapport à une face interne 42 (figure 3) de l'élément 24 et comportent chacun un trou axial 44. Les bossages 38 sont dimensionnés de manière à pouvoir s'interposer chacun entre deux tubes adjacents 18 du faisceau (figure 2). Dans l'exemple, les axes respectifs des bossages 38 sont espacés d'une distance D (figure 3) correspondant au double de l'intervalle I (figure 2) séparant deux tubes consécutifs.

Par ailleurs, le prolongement 36 est muni, sur sa face interne 42, de deux butées en saillie 46 (figures 1 à 3) espacées l'une de l'autre de la même distance D et propres à s'introduire chacune entre deux tubes consécutifs 18 de l'échangeur, tout en prenant appui contre la paroi de la boîte collectrice 16. Chacune des butées 46 s'étend sur une hauteur h inférieure à la hauteur H des intercalaires 20 (figure 2).

Le dispositif de fixation comprend en outre un second élément de fixation 48 comportant une partie centrale concave 50 propre à s'adapter contre une région périphérique opposée de la boîte collectrice 16 (figure 1). La partie 50 a une forme généralement symétrique de celle de la partie concave 26. Elle comporte une face interne 52 sur laquelle sont formés en relief deux bossages 54 en forme de calottes sphériques, ayant la même fonction que les bossages 30 mentionnés précédemment.

L'élément de fixation 48 comporte en outre une patte de retenue 56 prévue à une extrémité de la partie centrale 50 et comportant deux lumières 58 distantes l'une de l'autre et ménagées dans la zone de jonction de la partie centrale 50 et de la patte de retenue 56. Ces deux lumières 58 sont destinées à recevoir respectivement les deux ergots 32, en sorte que les bossages 34 s'opposent à la désolidarisation des éléments 24 et 48.

La patte de retenue 56 s'étend dans une direction sensiblement radiale par rapport à l'axe XX de la boîte collectrice 16 lorsque le dispositif est monté sur l'échangeur de chaleur (figure 1). Par ailleurs, trois entretoises 60 de forme générale triangulaire relient la partie centrale 50 à la patte de retenue 56 (figures 1 et 4).

L'élément de fixation 48 comporte en outre un prolongement 62 prévu à une autre extrémité de la partie centrale 50 et s'étendant parallèlement au prolongement 36 dans la position de montage de la figure 1. Dans cette position, le prolongement 62 vient en appui contre un côté longitudinal opposé 64 du faisceau de tubes.

Dans l'épaisseur du prolongement 62 sont ménagés deux trous 65 espacés de la même distance D et venant en regard des trous 44 des bossages 38. Les trous 65 sont destinés à recevoir respectivement deux vis 66, par exemple des vis auto-taraudeuses pour s'engager dans les trous respectifs 44 des bossages 38.

De plus, l'élément 62 possède une face interne 68 sur laquelle sont formées en saillie deux butées 70 qui constituent les homologues des butées 46 de l'élément 24.

Pour permettre la mise en place des éléments de fixation 24 et 48 autour de la boîte tubulaire 16, il convient de ménager deux espaces libres pour le passage des bossages 44, 46 et 70, en interrompant les intercalaires 20 comme montré à la figure 2. En serrant progressivement les vis 66, on assure un maintien efficace du dispositif 10 sur l'échangeur de chaleur, sans possibilité de débattement.

Le dispositif comprend en outre une patte de fixation 72 qui, dans l'exemple, prolonge la patte de retenue 56. La patte de fixation 72 est formée d'une seule pièce avec le second élément 48 et peut être fixée sur la pièce support 14 par tout moyen approprié. Les éléments 24 et 48 sont avantageusement obtenus chacun par moulage d'une matière plastique.

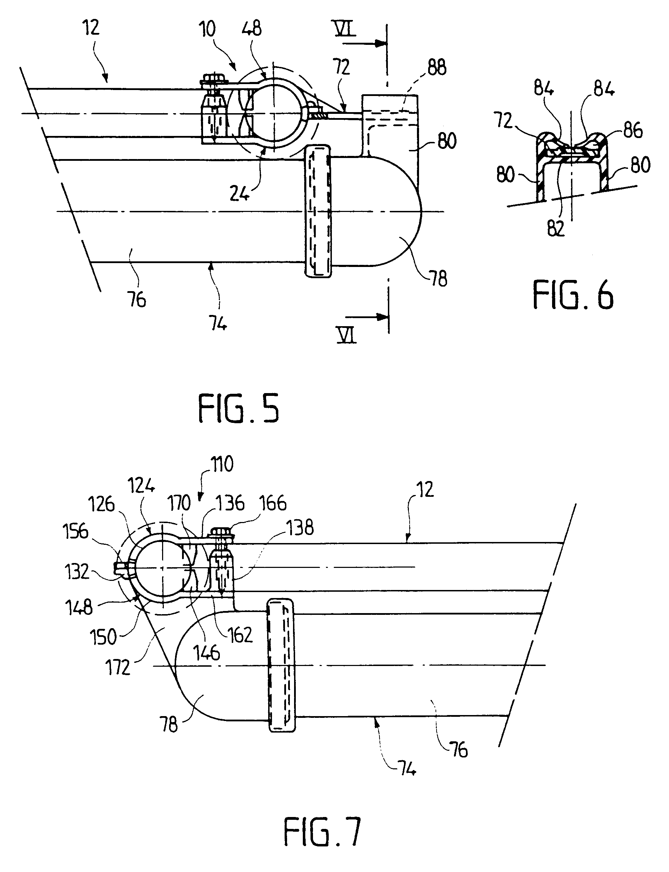

Dans la forme de réalisation des figures 5 et 6, à laquelle on se réfère maintenant, l'échangeur de chaleur 12, dans l'exemple un condenseur, est prévu pour être fixé sur un autre échangeur de chaleur 74, par exemple un radiateur de refroidissement, au moyen d'un dispositif de fixation 10 analogue à celui décrit précédemment. L'échangeur de chaleur 74 comprend un faisceau 76 raccordé à au moins une boîte collectrice 78, dans l'exemple en matière plastique, dont dépendent deux pattes espacées parallèles 80 réunies entre elles par une traverse 82 vers laquelle sont rappelés élastiquement deux bords repliés 84 qui délimitent ainsi un logement 86 pour recevoir la patte de fixation 72 du dispositif 10. Dans l'exemple, la patte de fixation a la forme d'une languette allongée ayant, en section droite, la forme d'un cavalier. La languette comporte des crans transversaux 88 (figure 5) destinés à recevoir les bords 84 pour immobiliser le dispositif de fixation 10 en position voulue.

On se réfère maintenant à la figure 7 qui montre une autre variante de réalisation de l'invention pour la fixation de l'échangeur de chaleur 12 sur l'autre échangeur de chaleur 74. Dans cette forme de réalisation, les éléments communs avec ceux des figures précédentes sont désignés sous les mêmes références numériques augmentées de 100.

Le dispositif de fixation 110 comprend ici une patte de fixation 172 rattachée à la partie centrale 150 et au prolongement 162 du second élément de fixation 148. La patte 172 est ici formée d'une seule pièce avec la boîte collectrice 78 de l'échangeur de chaleur 74. L'ensemble formé par le second élément 148 et la boîte collectrice 78 est monobloc et réalisé avantageusement par moulage d'une matière plastique. Dans cette forme de réalisation, la patte de retenue 156 s'étend sur une faible longueur correspondant approximativement à celle des ergots 132 du premier élément de fixation 124. Le bossage 138 fait ici partie du second élément de fixation 148.

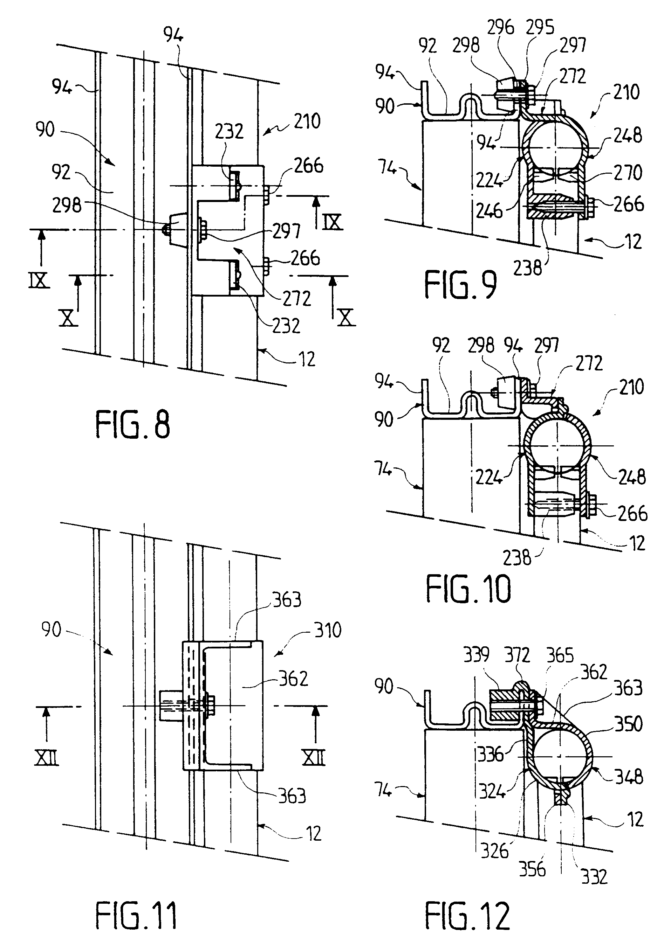

On se réfère maintenant aux figures 8 à 10 qui concernent une autre forme de réalisation de l'invention pour la fixation d'un échangeur de chaleur 12 sur un autre échangeur de chaleur 74. L'échangeur de chaleur 12 est ici fixé sur une traverse 90 de l'échangeur 74, cette traverse ayant une section transversale en U formée par un fond 92 et deux rebords en saillie 94.

Dans cette forme de réalisation, les éléments en commun avec ceux des figures 1 à 4 sont désignés sous les mêmes références numériques, augmentées de 200.

La fixation de l'échangeur 12 est effectuée par l'intermédiaire d'au moins un dispositif 210 fixé sur l'un des rebords 94 de la traverse 90. Dans l'exemple, le premier élément de fixation 224 est analogue à l'élément 24, tandis que le second élément de fixation 248 comporte une patte de fixation 272 ayant la forme d'une languette coudée à angle droit munie d'un trou 295 propre à venir en alignement avec un trou 296 ménagé dans un des rebords 94. La patte 272 est fixée au rebord 94 par une vis 297 traversant les trous 295 et 296 et se vissant dans un écrou 298.

Dans la forme de réalisation des figures 11 et 12 auxquelles on se réfère maintenant, l'échangeur de chaleur 12 est fixé également sur la traverse 90 de l'échangeur de chaleur 74.

Dans cette forme de réalisation, les éléments communs du dispositif de fixation sont désignés sous les mêmes références numériques que dans le cas des figures 1 à 4, mais augmentées de 300.

Le dispositif de fixation 310 comprend ici un premier élément de fixation 324 comportant une partie centrale concave 326, deux ergots de retenue 332 et un prolongement 336. Le second élément de fixation 348 comprend une partie centrale 350, une patte de retenue 356 et un prolongement 362.

A la différence des formes de réalisation précédentes, les prolongements 336 et 362 ne comportent ni moyens de serrage analogues aux moyens 38 et 66, ni butées analogues aux butées 46 et 70. Dans cette forme de réalisation, la patte de retenue 356 et les ergots de retenue 332 sont destinés à se loger dans des espaces appropriés ménagés dans le faisceau. Il en résulte que les prolongements 336 et 362 se situent en dehors du faisceau.

Dans l'exemple, le prolongement 336 du premier élément de fixation 324 est prolongé par une patte 372 repliée en forme de U et portant un écrou monobloc 339. Cette patte repliée est destinée à s'emmancher sur un rebord en saillie 94 de la traverse 92.

Le prolongement 362 est coudé à 90° et renforcé par trois entretoises 363 de forme générale triangulaire. Une vis 365 traverse successivement un trou du prolongement 362, un trou de la patte repliée et un trou du rebord 94 avant de s'engager dans l'écrou 339.

Dans les différentes formes de réalisation précitées, on utilise au moins deux et de préférence quatre dispositifs pour la fixation de l'échangeur de chaleur sur la pièce support.

Dans tous les cas, les deux éléments constitutifs de la pièce support sont avantageusement réalisés par moulage d'une matière plastique résistante.

## Revendications

1. Dispositif de fixation d'un échangeur de chaleur, du type comportant au moins une boîte collectrice tubulaire et un faisceau de tubes, sur une pièce support, caractérisé en ce qu'il comprend :
- un premier élément de fixation (24;124;224;324) comportant une partie centrale concave (26;126;226;326) propre à s'adapter contre une région périphérique de la boîte collectrice (16), au moins un ergot de retenue (32;132;232,332) prévu à une extrémité de la partie centrale et un prolongement (36;136;236;336) prévu à une autre extrémité de la partie centrale et portant des moyens de serrage (38,66;138,166;238,266;365,339);
- un second élément de fixation (48;148;248;348) comportant une partie centrale concave (50;150;250;350) propre à s'adapter contre une région périphérique opposée de la boîte collectrice (16), une patte de retenue (56;156;256;356) prévue à une extrémité de la partie centrale et comportant au moins une lumière (58;158;258;358) de réception de l'ergot de retenue du premier élément de fixation, et un prolongement (62;162;262;362) prévu à une autre extrémité de la partie centrale et portant des moyens de serrage (66;166;266;366) propres à coopérer avec les moyens de serrage du premier élément de fixation pour provoquer le rapprochement des prolongements respectifs du premier et du second éléments de fixation; et
- une patte de fixation (72;172;272;372) formée d'une seule pièce avec le premier élément de fixation et/ou le second élément de fixation et propre à être reliée à la pièce support (14).

2. Dispositif selon la revendication 1, caractérisé en ce que la patte de fixation (72) prolonge la patte de retenue (56) du second élément de fixation (48).

3. Dispositif selon la revendication 2, caractérisé en ce que la patte de fixation (72) est constituée d'une languette propre à être emmanchée à force dans un logement (86) de la pièce support (78).

4. Dispositif selon la revendication 1, caractérisé en ce que la patte de fixation (172) est rattachée à la partie centrale (150) et au prolongement (162) du second élément de fixation (148).

5. Dispositif selon la revendication 4, caractérisé en ce que la patte de fixation (172) est monobloc avec une boîte collectrice (78) d'un autre échangeur de chaleur (74).

6. Dispositif selon la revendication 2, caractérisé en ce que la patte de fixation (272) a la forme d'une languette coudée munie d'un trou (295) pour la fixation de la languette sur la pièce support, par exemple une traverse (90) d'un autre échangeur de chaleur (74), au moyen d'un ensemble vis-écrou (297,298).

7. Dispositif selon l'une des revendications 1 à 6, caractérisé en ce que les moyens de serrage comprennent au moins un bossage (38;138;238) dépendant d'un prolongement (36;136;236) du premier ou du deuxième élément de fixation et muni d'un trou coaxial ainsi qu'une vis (66;166;266) propre à traverser le prolongement (62;162;262) du second ou du premier élément de fixation et s'engager dans le trou axial du bossage correspondant.

8. Dispositif selon l'une des revendications 1 à 7, caractérisé en ce que le prolongement (36;136;236) du premier élément de fixation et le prolongement (62;162;262) du second élément de fixation comportent, sur des faces internes en regard, au moins une butée (46,70;146,170;246,270) en saillie propre à s'introduire entre des tubes adjacents (18) de l'échangeur de chaleur.

9. Dispositif selon la revendication 1, caractérisé en ce que le prolongement (336) du premier élément de fixation (324) constitue une patte repliée (372) munie d'un écrou (339) et propre à s'emmancher sur un rebord en saillie (94) de la pièce support et en ce que le prolongement (362) du second élément de fixation (348) est coudée pour former une patte pliée propre à s'appliquer contre la patte repliée, les moyens de serrage comportant une vis (365) propre à traverser successivement la patte pliée et la patte repliée et à coopérer avec l'écrou (339).

10. Dispositif selon l'une des revendications 1 à 9, caractérisé en ce que l'ergot de retenue (32) comporte un bossage (34).

11. Dispositif selon l'une des revendications 1 à 10, caractérisé en ce que les éléments de fixation sont réalisés chacun par moulage d'une matière plastique.

## Claims

1. A fastening device for securing on a support member a heat exchanger of the kind comprising at least one tubular header and a bundle of tubes, characterised in that it comprises:
- a first fastening element (24; 124; 224; 324) having a concave central portion (26; 126; 226; 326) which is adapted to fit against a peripheral region of the header (16), at least one retaining lug (32; 132; 232; 332) arranged at one end of the central portion, and an extension (36; 136; 236; 336) arranged at another end of the central portion and carrying gripping means (38, 66; 138, 166; 238, 266; 365, 339);
- a second fastening element (48; 148; 248; 348) having a concave central portion (50; 150; 250; 350) which is adapted to fit against an opposite peripheral region of the header (16), a retaining lug (56; 156; 256; 356) arranged at one end of the central portion and having at least one aperture (58; 158; 258; 358) for receiving the retaining lug of the first fastening element, and an extension (62; 162; 262; 362) arranged at another end of the central portion and carrying gripping means (66; 166; 266; 366) adapted to cooperate with the gripping means of the first fastening element, so as to bring the respective extensions of the first and second fastening elements together; and
- a fastening lug (72; 172; 272; 372) which is formed integrally with the first fastening element and/or the second fastening element, and which is adapted to be joined to the support member (14).

2. A device according to Claim 1, characterised in that the fastening lug (72) is an extension of the retaining lug (56) of the second fastening element (48).

3. A device according to Claim 2, characterised in that the fastening lug (72) comprises a tongue adapted to be force-fitted in an aperture (86) of the support member (78).

4. A device according to Claim 1, characterised in that the fastening lug (172) is attached to the said central portion (150) and to the extension (162) of the second fastening element (148).

5. A device according to Claim 4, characterised in that the fastening lug (172) is integral with a header (78) of another heat exchanger (74).

6. A device according to Claim 2, characterised in that the fastening lug (272) is in the form of a cranked tongue having a hole (295) far fixing, by means of a screw and nut assembly (297, 298), the tongue on to the support member, which is for example a cross member (90) of another heat exchanger (74).

7. A device according to one of Claims 1 to 6, characterised in that the gripping means comprise at least one boss (38; 138; 238), depending from an extension (36; 136; 236) of the first or second fastening element and having a coaxial hole, together with a screw (66; 166; 266) for extending through the extension (62; 162; 262) of the second or first fastening element so as to engage in the axial hole of the corresponding boss.

8. A device according to one of Claims 1 to 7, characterised in that the extension (36; 136; 236) of the first fastening element and the extension (62; 162; 262) of the second fastening element include, on internal faces in facing relationship to each other, at least one projecting abutment (46, 70; 146, 170; 246, 270) arranged to be introduced between the adjacent tubes (18) of the heat exchanger.

9. A device according to Claim 1, characterised in that the extension (336) of the first fastening element (324) comprises a bent lug (372) which is provided with a nut (339) and which is adapted to fit over a projecting flange (94) of the support member, and in that the extension (362) of the second fastening element (348) is bent so as to define a cranked lug adapted to be applied against the bent lug, the gripping means including a screw (365) arranged to extend successively through the cranked lug and the bent lug and to cooperate with the nut (339).

10. A device according to one of Claims 1 to 9, characterised in that the retaining lug (32) includes a boss (34).

11. A device according to one of Claims 1 to 10, characterised in that each of its said fastening elements is made by moulding in a plastics material.

## Patentansprüche

1. Vorrichtung zur Befestigung eines Wärmetauschers in der Ausführung mit mindestens einer rohrförmigen Sammelkammer und einem Rohrbündel an einem Halterungsteil, **dadurch gekennzeichnet**, daß sie die folgenden Bestandteile umfaßt:
- ein erstes Befestigungselement (24; 124; 224; 324) mit einem konkaven Mittelteil (26; 126; 226; 326), der sich an einen Umfangsbereich der Sammelkammer (16) anpassen kann, mindestens einer Haltenase (32; 132; 232; 332), die an einem Ende des Mittelteils vorgesehen ist, und einer Verlängerung (36; 136; 236; 336), die an dem anderen Ende des Mittelteils vorgesehen ist und an der Klemmittel (38, 66; 138, 166; 238, 266; 365, 339) angebracht sind;
- ein zweites Befestigungselement (48; 148; 248; 348) mit einem konkaven Mittelteil (50; 150; 250; 350), der sich an einen entgegengesetzten Umfangsbereich der Sammelkammer (16) anpassen kann, einem Halteansatz (56; 156; 256; 356), der an einem Ende des Mittelteils vorgesehen ist und mindestens ein Schlitzloch (58; 158; 258; 358) für die Aufnahme der Haltenase des ersten Befestigungselements aufweist, und einer Verlängerung (62; 162; 262; 362), die an dem anderen Ende des Mittelteils vorgesehen ist und an der Klemmittel (66; 166; 266; 366) für das Zusammenwirken mit den Klemmitteln des ersten Befestigungselements vorgesehen sind, um die Annäherung der jeweiligen Verlängerungen des ersten und zweiten Befestigungselements zu bewirken; und
- einen Befestigungsansatz (72; 172; 272; 372), der einstückig mit dem ersten und/oder dem zweiten Befestigungselement ausgebildet ist und mit dem Halterungsteil (14) verbunden werden kann.

2. Vorrichtung nach Anspruch 1 , **dadurch gekennzeichnet,** daß der Befestigungsansatz (72) den Halteansatz (56) des zweiten Befestigungselements (48) verlängert.

3. Vorrichtung nach Anspruch 2 , **dadurch gekennzeichnet,** daß der Befestigungsansatz (72) aus einer Lasche besteht, die in eine Aufnahme (86) des Halterungsteils (78) eingesteckt werden kann.

4. Vorrichtung nach Anspruch 1 , **dadurch gekennzeichnet,** daß der Befestigungsansatz (172) am Mittelteil (150) und an der Verlängerung (162) des zweiten Befestigungselements (148) angeschlossen ist.

5. Vorrichtung nach Anspruch 4 , **dadurch gekennzeichnet,** daß der Befestigungsansatz (172) einstückig mit der Sammelkammer (78) eines anderen Wärmetauschers (74) ausgeführt ist.

6. Vorrichtung nach Anspruch 2 , **dadurch gekennzeichnet,** daß der Befestigungsansatz (272) die Form einer abgewinkelten Lasche mit einer Bohrung (295) für die Befestigung der Lasche an dem Halterungsteil hat, beispielsweise an einer Querleiste (90) eines anderen Wärmetauschers (74), mittels einer Schrauben-Mutter-Verbindung (297, 298).

7. Vorrichtung nach einem der Ansprüche 1 bis 6, **dadurch gekennzeichnet,** daß die Klemmittel mindestens einen Vorsprung (38; 138; 238) umfassen, der zu einer Verlängerung (36; 136; 236) des ersten oder des zweiten Befestigungselements gehört und mit einer koaxialen Bohrung versehen ist, sowie eine Schraube (66; 166; 266), die durch die andere Verlängerung (62; 162; 262) des zweiten bzw. des ersten Befestigungselements hindurchgehen und in die axiale Bohrung des entsprechenden Vorsprungs eingreifen kann.

8. Vorrichtung nach einem der Ansprüche 1 bis 7, **dadurch gekennzeichnet,** daß die Verlängerung (36; 136; 236) des ersten Befestigungselements und die Verlängerung (62; 162; 262) des zweiten Befestigungselements auf gegenüberliegenden Innenflächen mindestens einen vorspringenden Anschlag (46, 70; 146, 170; 246, 270) umfassen, der sich zwischen benachbarten Rohren (18) des Wärmetauschers einfügen kann.

9. Vorrichtung nach Anspruch 1 , **dadurch gekennzeichnet,** daß die Verlängerung (336) des ersten Befestigungselements (324) einen umgebogenen Ansatz (372) bildet, der mit einer Mutter (339) versehen ist und an einem vorspringenden Rand (94) des Halterungsteils eingreifen kann, und daß die Verlängerung (362) des zweiten Befestigungselements (348) abgewinkelt ist, um einen abgebogenen Ansatz zu bilden, der an dem umgebogenen Ansatz angedrückt werden kann, wobei die Klemmittel eine Schraube (365) umfassen, die nacheinander durch den abgebogenen Ansatz und den umgebogenen Ansatz hindurchgehen und mit der Mutter (339) zusammenwirken kann.

10. Vorrichtung nach einem der Ansprüche 1 bis 9, **dadurch gekennzeichnet,** daß die Haltenase (32) einen Vorsprung (34) umfaßt.

11. Vorrichtung nach einem der Ansprüche 1 bis 10, **dadurch gekennzeichnet,** daß die Befestigungselemente jeweils durch Formung aus einem Kunststoff hergestellt werden.
